# FASCICULE DE BREVET EUROPEEN

(11) **EP 2 795 854 B1**
(45) Date de publication et mention de la délivrance du brevet: **10.05.2017**
(21) Numéro de dépôt: 12821272.7
(22) Date de dépôt: 19.12.2012
(51) Int. Cl.: H04L 12/801

(54) **SYSTEME D'EMISSION DE FLOTS DE DONNEES CONCURRENTS SUR UN RESEAU**
SYSTEM ZUR ÜBERTRAGUNG VON KONKURRIERENDEN DATENSTRÖMEN ÜBER EIN NETZWERK
SYSTEM FOR THE TRANSMISSION OF CONCURRENT DATA STREAMS OVER A NETWORK

(30) Priorité: 19.12.2011 FR 1161872
(43) Date de publication de la demande: 29.10.2014
(73) Titulaire: Kalray, 91400 Orsay (FR)
(72) Inventeur: DURAND, Yves, 38330 Saint Ismier (FR); BLAMPEY, Alexandre, 38360 Sassenage (FR)
(74) Mandataire: de Jong, Jean Jacques
(86) Numéro de dépôt international: PCT/FR2012/000536
(87) Numéro de publication internationale: WO 2013/093241

(56) Documents cités:
- US-A1- 2006 067 225
- US-B1- 6 704 321

## Description

### Domaine technique de l'invention

L'invention est relative aux réseaux sur puce et plus particulièrement à un système d'ordonnancement chargé d'émettre des flots de données sur le réseau au niveau d'un routeur.

### État de la technique

Il existe de nombreux algorithmes de canalisation de trafic visant à améliorer l'utilisation de la bande passante et la qualité de service sur un réseau. Dans le contexte des réseaux de communication, les travaux initiés par Cruz [« A Calculus for Network Delay », Part I: Network Elements in Isolation and part II: Network Analysis, R.L. Cruz, IEEE Transactions on Information Theory, vol 37, n°1, Jan 1991] puis par Stiliadis [« Latency-Rate Servers: A General Model for Analysis of Traffic Scheduling Algorithms », Dimitrios Stiliadis et al., IEEE/ACM TRANSACTIONS ON NETWORKING, VOL. 6, NO. 5, OCTOBER 1998] ont construit une théorie qui relie les notion de taux de service, la latence pire cas d'un canal de communication partagé, et les taux d'utilisation des ressources de stockage sur les éléments du réseau.

Cette théorie a servi de fondement pour différents systèmes de gestion de trafic. La méthode la plus fréquente au niveau des routeurs est la méthode d'attente équitable pondérée décrite dans « Réseaux 4eme édition » de Andrew Tannenbaum en page 441. Une alternative mieux adaptée aux réseaux sur puce est d'injecter le trafic en utilisant le mécanisme de seau percé (« leaky bucket »), décrit en page 434 et suivantes dans « Réseaux 4eme édition » de Andrew Tannenbaum.Un autre exemple de l'art antérieur se trouve dans US2006/067225. Dans tous les cas, cela revient à associer un débit moyen ρᵢ à une « session » Si sur un lien réseau.

A chaque session d'émission de données Si (i = 1, 2,... n), par exemple un canal, une connexion, ou un flot, on alloue une mémoire tampon, ou file. Les contenus de ces files sont transférés séquentiellement sur un lien réseau L au débit nominal *r* du lien.

Un régulateur de débit opère sur chaque file, de sorte à limiter le débit moyen de la session correspondante Si à une valeur ρᵢ ≤ *r.* Les débits ρᵢ sont choisis en général de manière que leur somme soit inférieure ou égale à *r.*

Pour comprendre de façon globale le fonctionnement, on peut imaginer que les contenus des files sont vidés en parallèle dans le réseau à des débits ρᵢ respectifs. En réalité, les files sont scrutées de manière séquentielle, et la régulation de débit est opérée en scrutant moins fréquemment les files associées aux débits inférieurs, en cherchant un effet de moyenne sur plusieurs cycles de scrutation.

Dans ces conditions, Stiliadis et al. démontrent que la latence entre l'instant de lecture d'un premier mot d'un paquet dans une file et l'envoi du dernier mot du paquet sur le lien L est bornée pour certains types d'algorithmes d'ordonnancement. Dans le cas de l'attente équitable pondérée ou WFQ (de l'anglais « Weighted Fair-Queuing »), cette latence est bornée par Spᵢ/ρᵢ + Spₘₐₓ/r, où Spᵢ est la taille de paquet maximale de la session i, et Spₘₐₓ la taille de paquet maximale sur l'ensemble des sessions en cours.

Cette composante de latence est indépendante de la taille des files. Or il est connu que, dans les systèmes utilisant plusieurs files pour canaliser plusieurs flux sur un lien partagé, la taille des files introduit une autre composante de latence, entre l'écriture d'une donnée dans une file et la lecture de cette même donnée pour l'émettre sur le réseau.

### Résumé de l'invention

On souhaite disposer d'un système d'émission de plusieurs flots de données permettant de réduire la latence totale entre l'arrivée des données dans une file et l'émission de ces mêmes données sur le réseau.

On tend à satisfaire ce besoin grâce à un système d'émission de flots de données concurrents sur un réseau, comprenant une mémoire organisée pour recevoir les données en cours de production des flots ; plusieurs files affectées respectivement aux flots de données, organisées pour recevoir les données sous forme d'unités de transmission atomiques ; un régulateur de débit configuré pour scruter les files en séquence et, si la file scrutée contient une unité de transmission complète, l'émettre sur le réseau au débit nominal du réseau ; un séquenceur configuré pour scruter les files de manière circulaire et activer un signal de requête de données lorsque l'état de remplissage de la file scrutée n'a pas atteint un seuil commun à toutes les files, lequel seuil est supérieur à la taille maximale des unités de transmission ; et un circuit de gestion de transferts mémoire configuré pour recevoir le signal de requête de données et y répondre en transférant des données de la mémoire vers la file correspondante à la vitesse maximale du système, jusqu'à atteindre le seuil commun.

On tend également à satisfaire ce besoin grâce à un système d'émission de flots de données concurrents sur un réseau, comprenant une mémoire contenant des données en cours de production des flots ; plusieurs files affectées respectivement aux flots de données, organisées pour recevoir les données sous forme d'unités de transmission atomiques ; un régulateur de débit configuré pour scruter les files en séquence et, si la file scrutée contient une unité de transmission complète, l'émettre sur le réseau au débit nominal du réseau ; un circuit de gestion de files configuré pour remplir individuellement chaque file à partir des données contenues dans la mémoire, à la vitesse nominale du système, jusqu'à atteindre un seuil commun à toutes les files ; un circuit de configuration paramétrable pour fournir le seuil commun des files ; et un processeur programmé pour produire les flots et gérer leur affectation aux files, et connecté au circuit de configuration pour ajuster dynamiquement le seuil en fonction de la taille d'unité de transmission maximale utilisée par les flots en cours d'émission.

Selon un mode de réalisation, le seuil commun des files est inférieur au double de la taille maximale des unités de transmission.

Selon un mode de réalisation, le système comprend une interface réseau incluant les files, le régulateur de débit, et le séquenceur ; un processeur programmé pour produire les données des flots, gérer l'affectation des files aux flots, et déterminer les débits moyens des flots ; un bus système interconnectant le processeur, la mémoire et le circuit de gestion de transferts mémoire ; et un circuit de calcul du seuil commun à partir des contenus de deux registres programmables par le processeur, l'un contenant la taille maximale de l'unité de transmission, et l'autre un coefficient multiplicatif compris entre 1 et 2.

Selon un mode de réalisation, le régulateur de débit est configuré pour ajuster le débit moyen d'un flot en bornant le nombre d'unités de transmission émises sur le réseau dans une fenêtre temporelle consécutive.

### Description sommaire des dessins

Des modes de réalisation seront exposés dans la description suivante, faite à titre non limitatif en relation avec les figures jointes parmi lesquelles :
- la figure 1 représente schématiquement un système d'émission de plusieurs flots concurrents sur un lien réseau partagé, tel qu'il pourrait être réalisé de manière classique avec les enseignements précédemment évoqués ;
- la figure 2 est un graphe illustrant le fonctionnement du système de la figure 1 ;
- la figure 3 représente schématiquement un mode de réalisation optimisé d'un système d'émission de plusieurs flots concurrents sur un ou plusieurs liens réseau partagés ;
- la figure 4 est un graphe illustrant le fonctionnement du système de la figure 3 ;
- la figure 5 est un graphe illustrant des évolutions de remplissage d'une file du système de la figure 3 ;
- la figure 6 est un graphe illustrant l'évolution de l'efficacité de l'utilisation moyenne de la bande passante du système en fonction de la taille effective des files ; et
- la figure 7 représente un mode de réalisation de système d'émission permettant un réglage dynamique du seuil de signalisation de file pleine.

### Description d'un mode de réalisation préféré de l'invention

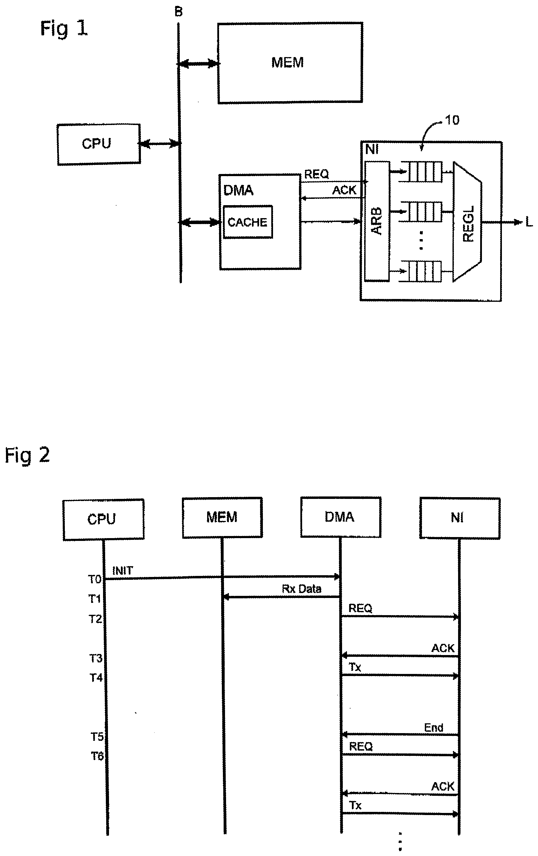

La figure 1 représente schématiquement un exemple de système d'émission de plusieurs flots concurrents sur un lien réseau partagé L, tel qu'il serait réalisé en mettant en oeuvre de manière traditionnelle les enseignements de Cruz, Stiliadis et Tannenbaum, évoqués en introduction.

Le système comprend un processeur CPU, une mémoire MEM, et un circuit d'accès mémoire direct DMA, interconnectés par un bus système B. Une interface réseau NI est connectée pour envoyer sur le lien réseau L des données fournies par le circuit DMA. Cette interface réseau comprend plusieurs files 10 agencées, par exemple, pour mettre en oeuvre une attente équitable pondérée (WFQ). Le remplissage des files est géré par un circuit d'arbitrage ARB, tandis que le vidage des files sur le lien réseau L est géré par un circuit de régulation de débit REGL.

Le circuit DMA est conçu pour émettre un signal de requête REQ vers l'interface réseau NI lorsque des données sont prêtes à émettre. Le circuit DMA est de préférence muni d'une mémoire cache servant à stocker ces données pendant l'émission, de sorte que le bus système soit libéré. Le circuit d'arbitrage de l'interface réseau est conçu pour traiter le signal de requête et renvoyer un signal d'acquittement ACK vers le circuit DMA.

Alors que les transferts de données de la mémoire vers le circuit DMA et vers les files 10 peuvent être effectués par mots de la largeur du bus système, par salves de taille quelconque, les transferts des files 10 vers le lien réseau L doivent être compatibles avec le type de réseau. Du point de vue du réseau, les données dans les files sont organisées en « unités de transmission », par exemple des « cellules» telles qu'utilisées dans les réseaux de type ATM, des « paquets » dans les réseaux IP et le plus souvent dans les réseaux sur puce, ou des « trames » dans les réseaux de type Ethernet. Comme la présente description est faite dans le cadre d'un réseau sur puce, on parlera ci-après plutôt de « paquets », sachant que les principes décrits s'appliquent de manière plus générale à des unités de transmission.

Un paquet est le plus souvent « atomique », c'est-à-dire qu'on cherche à transmettre les mots qui le constituent de manière contiguë sur le lien réseau L, sans les mélanger à des mots appartenant à des flots concurrents. Ce n'est que lorsqu'un paquet complet a été émis sur le lien qu'on pourra émettre un nouveau paquet. En outre, ce n'est que quand une file contient un paquet complet que le régulateur de débit REGL pourra décider de l'émettre.

La figure 2 est un graphe illustrant plus en détail le déroulement d'une émission d'un lot de données dans le système de la figure 1. Il représente sur des lignes temporelles verticales les interactions entre les composants du système. Par « lot de données » on entend une partie sécable d'un flot de données normalement produit en continu. Un flot de données peut correspondre à la transmission d'une vidéo, alors qu'un lot correspond, par exemple, à une image ou à une ligne d'image.

En T0 le processeur CPU, après avoir produit un lot de données dans un emplacement de la mémoire MEM, initialise le circuit DMA avec l'adresse source du lot et l'adresse destination, à laquelle est associée une des files 10 de l'interface réseau.

En T1, le circuit DMA transfère le lot de données de la mémoire MEM vers sa mémoire cache interne, et libère le bus système.

En T2, le circuit DMA émet une requête d'accès REQ vers l'interface réseau NI. Cette requête identifie la file 10 dans laquelle les données doivent être écrites.

En T3, l'interface réseau acquitte la requête par un signal ACK, signifiant que la file 10 sélectionnée dispose de place pour recevoir des données.

En T4, le circuit DMA réagit à l'acquittement par la transmission de données de sa mémoire cache vers l'interface réseau NI, où elles sont écrites dans la file 10 correspondante.

En T5, l'interface réseau détecte l'état plein de la file et signale au circuit DMA la fin du transfert.

En T6, le circuit DMA, ayant encore des données à transmettre, émet une nouvelle requête pour demander un nouveau transfert, et le cycle recommence.

Le vidage des files 10 dans le réseau s'effectue de manière décorrélée de l'arbitrage des requêtes, selon un mécanisme de régulation de débit qui ne peut traiter une file que si elle contient un paquet complet.

Ce protocole de transfert fonctionne convenablement lorsque les producteurs de données sollicitent le réseau de manière ponctuelle, en d'autres termes lorsqu'un producteur n'occupe pas la bande passante de son lien réseau de manière soutenue. C'est le cas dans les réseaux de communication.

Dans un réseau sur puce, on cherche à occuper la bande passante des liens réseau au maximum et les producteurs sont pour cela conçus pour saturer leurs liens réseau de manière soutenue.

Comme on l'a précédemment indiqué, un producteur peut émettre plusieurs flots concurrents sur son lien réseau. Cela se traduit en figure 2 par le transfert de plusieurs lots de données correspondants dans la mémoire cache du circuit DMA et par la présentation de plusieurs requêtes concurrentes à l'interface réseau NI. Une seule requête est acquittée à la fois, à la suite d'un arbitrage qui prend également en compte la place disponible dans les files 10.

Dans le cas d'une phase soutenue de remplissage des files 10 survenant pour répondre à de nombreuses requêtes instantes, les délais d'arbitrage peuvent prendre une proportion non négligeable sur la bande passante disponible.

Dans ce contexte, il est possible que la file de destination reste vide pendant un intervalle de temps et donc « passe son tour » pour des opportunités d'accès au réseau, ce qui a pour effet de diminuer la bande passante effectivement utilisée. D'après la théorie des files d'attente, la probabilité que la file soit vide est d'autant moins élevée que la file est grande : c'est pourquoi on surdimensionne souvent la taille de cette file.

Une autre solution pour réduire cette probabilité est d'augmenter la fréquence des requêtes du processus producteur. Ces deux solutions sont coûteuses en efficacité dans le contexte d'un réseau sur puce, c'est pourquoi on propose ici un système alternatif d'accès au réseau.

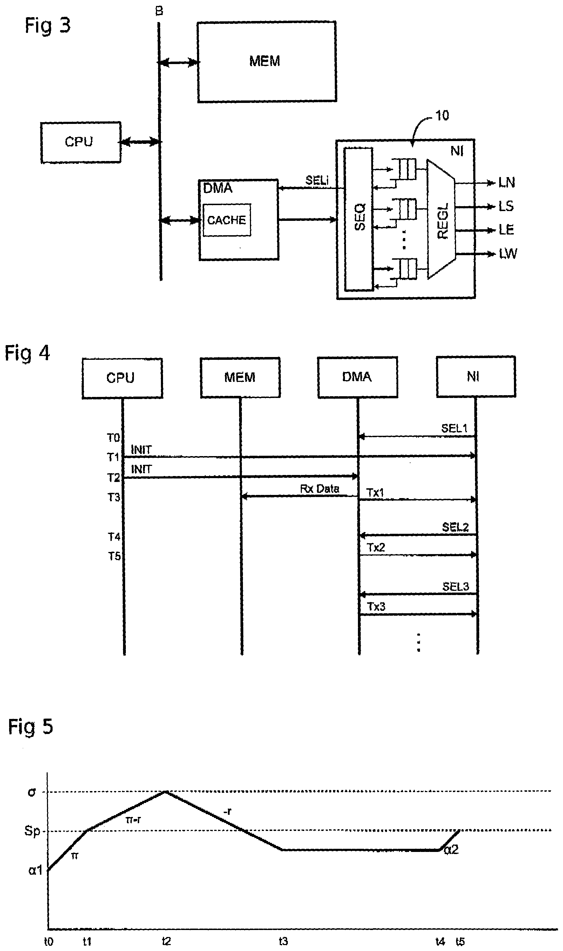

La figure 3 représente schématiquement un mode de réalisation d'un tel système. Ce mode de réalisation est décrit dans le cadre d'un réseau sur puce de structure matricielle torique, tel que décrit dans la demande de brevet US2011-0026400. Chaque noeud du réseau est formé d'un routeur à cinq voies bidirectionnelles, comprenant une voie locale attribuée à au circuit DMA et quatre voies (nord LN, sud LS, est LE, et ouest LW) reliées respectivement aux quatre routeurs adjacents de la matrice.

On considère ici la voie locale comme le point d'entrée du réseau. Les paquets pénétrant par cette voie locale peuvent être aiguillés, selon leur destination dans le réseau, par l'une quelconque des quatre autres voies, que l'on considérera comme des liens réseau indépendants. Ainsi, au lieu d'être émis dans le réseau par un seul lien L, comme à la figure 1, les paquets peuvent ici être émis par l'un des quatre liens LN, LS, LE et LW. Cette multitude de liens réseau n'affecte pas les principes décrits ici, qui peuvent s'appliquer à un lien unique. Un flot est en principe associé à un seul lien réseau, qui peut être considéré comme le lien unique de la figure 1. Une différence existe au niveau de la bande passante globale du réseau lorsque plusieurs flots concurrents sont affectés à des liens différents : ces flots peuvent être émis en parallèle par le régulateur de débit, de sorte que la bande passante globale est temporairement un multiple de la bande passante d'un lien isolé.

Le système de la figure 3 diffère de celui de la figure 1 essentiellement par le protocole de communication mis en oeuvre entre le circuit DMA et l'interface réseau NI. Le circuit DMA n'émet plus de requêtes vers l'interface réseau pour transmettre des données, mais attend que l'interface réseau NI demande des données par l'activation d'un signal de sélection SELi identifiant la file 10 à servir. Le signal SELi est produit par un séquenceur SEQ qui remplace le circuit d'arbitrage de requêtes de la figure 1.

Le séquenceur SEQ est conçu simplement pour scruter de manière circulaire les files 10 et activer le signal de sélection SELi dès que la file scrutée dispose de place pour recevoir des données. Alors le séquenceur s'arrête, attend que la file soit remplie par le circuit DMA, désactive le signal SELi et passe à la file suivante.

La figure 4 illustre ce fonctionnement plus en détail.

En T0, le système est inactif et toutes les files 10 sont vides. Le séquenceur SEQ active le signal de sélection SEL1 de la première file et attend des données.

En T1, le processeur CPU a produit plusieurs lots de données dans la mémoire MEM. Il initialise l'interface réseau NI pour associer des files respectives 10 à ces lots, par exemple en écrivant ces informations dans des registres du séquenceur SEQ.

En T2, le processeur initialise le circuit DMA pour transférer les multiples lots dans les files correspondantes.

En T3, le circuit DMA lit les lots de données dans sa mémoire cache. Pratiquement simultanément, comme le signal SEL1 est actif, le circuit DMA commence à transférer les données du premier lot (Tx1) vers l'interface réseau NI, où elles sont écrites dans la première file 10.

En T4, la première file est pleine. Le séquenceur désactive le signal SEL1 et active le signal SEL2 identifiant la deuxième file à remplir.

En T5, le circuit DMA transfère des données du deuxième lot (Tx2) vers l'interface réseau, où elles sont écrites dans la deuxième file 10, jusqu'à ce que le signal SEL2 soit désactivé et un nouveau signal SEL3 activé pour le transfert du lot suivant.

Avec ce système, on traite les différents transferts de flots de manière séquentielle, sans besoin d'arbitrage pour décider du flot à traiter. La bande passante entre le circuit DMA et les files peut être utilisée à 100 %.

On cherche maintenant à réduire la latence introduite par les files 10. Pour cela, la taille des files doit être minimisée. La taille minimale est la taille de paquet *Sp,* puisque le régulateur de débit ne traite une file que si elle contient un paquet complet. Il reste à établir si cette taille minimale est satisfaisante ou, sinon, quelle taille minimale il est souhaitable de prendre.

La figure 5 est un graphe illustrant un exemple d'évolution du remplissage d'une file 10 en cours de fonctionnement. On prend l'exemple d'un débit de remplissage deux fois supérieur au débit nominal *r* du réseau. Le débit π est le débit nominal de transmission du circuit DMA, et il est en règle générale supérieur au débit nominal d'un lien réseau. La taille de paquet est notée *Sp* et la taille de la file est notée σ.

A un instant t0, la file est sélectionnée pour être remplie par le séquenceur SEQ. Son taux de remplissage résiduel vaut α1 < *Sp.* La file se remplit au débit π.

A un instant t1, le taux remplissage de la file atteint *Sp.* La file contient un paquet complet, et son vidage dans le réseau peut commencer. Si le régulateur de débit REGL sélectionne effectivement cette file à t1, la file est vidée au débit *r*. La file continue à se remplir plus lentement, à un débit apparent de π-*r*.

A un instant t2, le taux de remplissage de la file atteint sa limite σ. Le remplissage s'arrête, mais le vidage continue. La file se vide au débit *r*. Le séquenceur SEQ sélectionne la file suivante pour le remplissage.

A un instant t3, on a émis un paquet complet sur le réseau. La file atteint un taux de remplissage résiduel α2 < *Sp*, de sorte qu'un nouveau paquet complet ne peut pas être émis. Le régulateur de débit passe au traitement de la file suivante.

A un instant t4, la file est de nouveau sélectionnée pour être remplie, et le cycle recommence comme en t0, à partir d'un nouveau taux de remplissage résiduel α2. La file contient de nouveau un paquet complet à un instant t5.

Ce graphe ne montre pas l'influence des limitations de débit ρ appliquées aux flots. Le graphe montre un vidage des files à la vitesse nominale *r* du lien réseau. En fait, une limitation de débit est opérée par effet de moyenne : les files sont toujours vidées à la vitesse maximale disponible, mais c'est la fréquence de leur scrutation (qui n'apparaît pas sur le graphe) qui est ajustée par le régulateur de débit pour obtenir les débits moyens. Par exemple, avec trois files A, B et C de débits 0,5, 0,25 et 0,25, on utiliserait la séquence de scrutation suivante : A, B, A, C, A, B, A, C...

De préférence, on utilisera une régulation de débit telle que décrite dans la demande de brevet US2011-0026400. Cette régulation est basée sur des quotas de paquets que les flots peuvent émettre sur le réseau dans une fenêtre temporelle glissante. Avec une telle régulation, toutes les files sont scrutées au début d'une fenêtre, de sorte que chaque file émet les paquets qu'elle a, même si elle est associée à un flot de plus faible débit. Par contre, dès qu'une file a émis son quota de paquets dans la fenêtre, sa scrutation est arrêtée jusqu'au début de la fenêtre suivante. Ainsi, le nombre de paquets qu'un flot peut émettre sur le réseau est borné dans chaque fenêtre, mais les paquets peuvent être émis à n'importe quel moment dans la fenêtre.

Comme on l'a précédemment indiqué, le vidage de la file ne peut commencer que lorsque la file contient un paquet complet. A la figure 5, cela se produit aux instants t1 et t5. On s'aperçoit qu'il existe une phase morte en début de chaque cycle où on ne peut pas vider la file. Comme le régulateur de débit opère de manière indépendante du séquenceur, il existe une probabilité pour que le régulateur scrute une file pendant une telle phase morte. Il doit alors sauter la file et passer à la suivante, diminuant l'efficacité du système.

Intuitivement, on peut observer que les phases mortes diminuent lorsqu'on augmente la taille σ des files, et qu'elles pourraient disparaître pour σ = 2*Sp.*

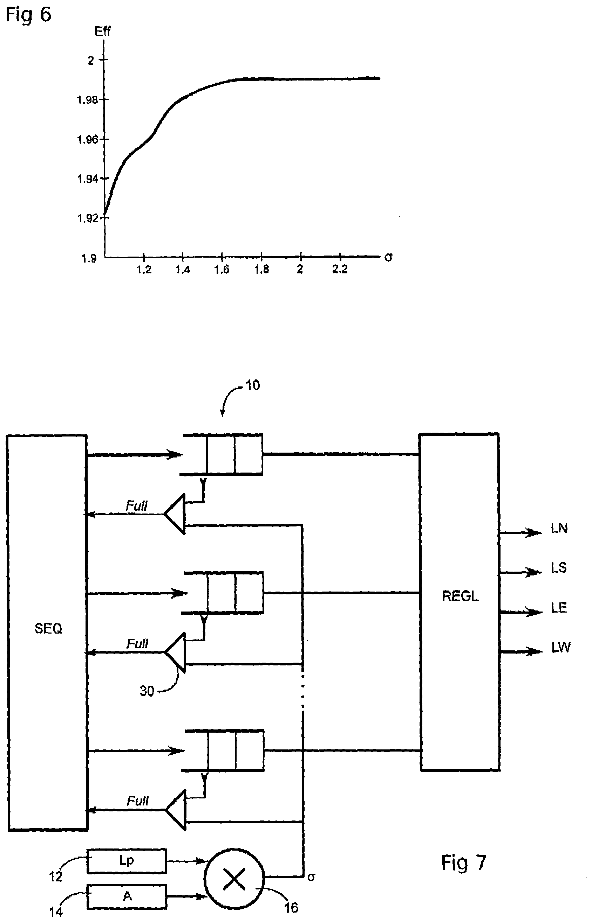

La figure 6 est un graphe illustrant l'évolution de l'efficacité d'utilisation de la bande passante du système en fonction de la taille σ des files. Ce graphe est le résultat de simulations faites pour quatre files avec π = 2*r*. Les débits ρ des flots correspondants ont été choisis aux valeurs 0,2, 0,3, 0,7 et 0,8 (totalisant un maximum théorique de 2, reporté sur l'axe des ordonnées du graphe).

On s'aperçoit que l'efficacité démarre à une valeur honnête de 1,92 pour σ = 1, et qu'elle tend asymptotiquement vers 2. On a pratiquement atteint 1,99 pour σ = 1,6. En d'autres termes, on a une efficacité de 96 % avec σ = 1, et une efficacité de 99,5 % avec σ = 1,6.

Le système s'avère donc particulièrement efficace avec une taille de file comprise entre 1 et 2 paquets, ce qui représente une valeur particulièrement faible permettant de réduire la latence de manière significative.

Il s'avère que la taille de paquet peut varier d'un flot à l'autre, selon la nature des données transmises. Dans ce cas, afin que le système soit adapté à toutes les situations, il conviendrait que la taille des files soit choisie en fonction de la taille maximale des paquets à traiter, ce qui pénaliserait le système lorsque la majorité des flots traités ont une taille de paquet inférieure.

Ce compromis peut être amélioré en rendant la taille de file réglable de manière dynamique, en fonction des flots en cours de traitement. En pratique, une file dans une interface réseau est un élément matériel dont la taille n'est pas variable. Ainsi, on garde une taille de file physique fonction de la taille de paquet maximale des flots que l'on compte traiter dans le système, mais on affecte aux files un seuil de remplissage réglable σ. C'est le taux de remplissage par rapport à ce seuil que vérifie le séquenceur SEQ pour activer le signal de sélection SELi correspondant (figure 3).

La figure 7 représente un exemple de réalisation d'interface réseau, intégrant des files 10 dont le seuil de remplissage est réglable. La taille de paquet *Sp* et un coefficient multiplicateur K (par exemple 1,6) sont écrits dans des registres respectifs 12, 14, de l'interface réseau. Cette écriture peut avoir lieu à l'instant T1 du graphe 4, où le processeur CPU configure l'interface réseau pour affecter les files aux flots à transférer. Si les flots à transférer ont des tailles de paquet différentes, la valeur *Sp* à écrire dans le registre 12 est la plus grande.

Les contenus des registres 12 et 14 sont multipliés en 16 pour produire le seuil σ. Ce seuil est utilisé par des comparateurs 30 associés respectivement aux files 10. Chaque comparateur 30 active un signal *Full* à l'attention du séquenceur SEQ lorsque le taux de remplissage de la file 10 correspondante atteint la valeur σ. A l'activation d'un signal *Full*, le séquenceur sélectionne la file suivante pour le remplissage.

Bien qu'on préfèrera utiliser le seuil réglable dans le système de la figure 3, les bénéfices que cette solution apporte sont indépendants du système. Ainsi, on pourra l'utiliser dans le système de la figure 1 ou tout autre système.

## Revendications

1. Système d'émission de flots de données concurrents sur un réseau, comprenant :
• une mémoire (MEM) organisée pour recevoir les données en cours de production des flots ;
• plusieurs files (10) affectées respectivement aux flots de données, organisées pour recevoir les données sous forme d'unités de transmission atomiques ;
• un régulateur de débit (REGL) configuré pour scruter les files en séquence et, si la file scrutée contient une unité de transmission complète, l'émettre sur le réseau au débit nominal du réseau ;
• un séquenceur (SEQ) configuré pour scruter les files de manière circulaire et activer un signal de requête de données (SELi) lorsque l'état de remplissage de la file scrutée n'a pas atteint un seuil (σ) commun à toutes les files, lequel seuil est supérieur à la taille maximale des unités de transmission ; et
• un circuit de gestion de transferts mémoire (DMA) configuré pour recevoir le signal de requête de données et y répondre en transférant des données de la mémoire vers la file correspondante à la vitesse maximale du système, jusqu'à atteindre le seuil commun.

2. Système selon la revendication 1, dans lequel le seuil commun des files est inférieur au double de la taille maximale des unités de transmission.

3. Système selon la revendication 2, dans lequel le seuil commun est réglable dynamiquement pour tenir compte des tailles d'unité de transmission effectivement utilisées par les flots en cours d'émission.

4. Système selon la revendication 2, comprenant :
• une interface réseau (NI) incluant les files, le régulateur de débit, et le séquenceur ;
• un processeur (CPU) programmé pour produire les données des flots, gérer l'affectation des files aux flots, et déterminer les débits moyens des flots ;
• un bus système (B) interconnectant le processeur, la mémoire et le circuit de gestion de transferts mémoire (DMA) ; et
• un circuit de calcul du seuil commun à partir des contenus de deux registres programmables par le processeur, l'un contenant la taille maximale de l'unités de transmission (*Sp*), et l'autre un coefficient multiplicatif (K) compris entre 1 et 2.

5. Système selon la revendication 1, dans lequel le régulateur de débit est configuré pour ajuster le débit moyen d'un flot en bornant le nombre d'unités de transmission émises sur le réseau dans une fenêtre temporelle consécutive.

## Patentansprüche

1. System zum Senden von konkurrierenden Datenströmen über ein Netzwerk, umfassend:
- einen Speicher (MEM), der organisiert ist, um die Daten während der Herstellung der Ströme zu empfangen;
- mehrere Files (10), die jeweils den Datenströmen zugeordnet und organisiert sind, um die Daten in Form von atomaren Übertragungseinheiten zu empfangen;
- einen Mengenregler (REGL), der dazu vorgesehen ist, die Files in der Sequenz zu durchsuchen, und wenn das durchsuchte File eine vollständige Übertragungseinheit enthält, diese über das Netzwerk mit der Nominalmenge des Netzwerks zu senden;
- einen Sequenzer (SEQ), der dazu vorgesehen ist, die Files kreisförmig zu durchsuchen und ein Datenanfragesignal (SELi) zu aktivieren, wenn der Füllstand des durchsuchten Files nicht eine allen Files gemeinsame Grenze (σ) erreicht hat, wobei die Grenze höher als die maximale Größe der Übertragungseinheiten ist; und
- eine Steuerschaltung für Speichertransfers (DMA), die dazu vorgesehen ist, das Datenanfragesignal zu empfangen und darauf zu antworten, wobei sie Daten von dem Speicher zu dem entsprechenden File mit der Maximalgeschwindigkeit des Systems transferiert, bis die gemeinsame Grenze erreicht ist.

2. System nach Anspruch 1, bei dem die gemeinsame Grenze der Files niedriger als das Doppelte der maximalen Größe der Übertragungseinheiten ist.

3. System nach Anspruch 2, bei dem die gemeinsame Grenze dynamisch einstellbar ist, um tatsächlich von den Strömen während des Sendens verwendete Größen von Übertragungseinheiten zu berücksichtigen.

4. System nach Anspruch 2, umfassend:
- eine Netzwerkschnittstelle (NI) einschließlich der Files, des Mengenreglers und des Sequenzers;
- einen Prozessor (CPU), der programmiert ist, um die Daten der Ströme zu erzeugen, die Zuteilung der Files zu den Strömen zu verwalten und die durchschnittlichen Mengen der Ströme zu bestimmen;
- ein Bussystem (B), das den Prozessor, den Speicher und die Steuerschaltung von Speichertransfers (DMA) zusammenschließt; und
- eine Schaltung zur Berechnung der gemeinsamen Grenze aus den Inhalten von zwei vom Prozessor programmierbaren Registern, wobei eines die maximale Größe der Übertragungseinheit (*Sp*) und das andere einen Multiplikationskoeffizienten (K) zwischen 1 und 2 enthält.

5. System nach Anspruch 1, bei dem der Mengenregler dazu vorgesehen ist, die durchschnittliche Menge eines Stroms anzupassen, wobei die Anzahl von Übertragungseinheiten, die über das Netzwerk in einem nachfolgenden Zeitfenster gesandt werden, beschränkt wird.

## Claims

1. System for the transmission of concurrent data streams over a network, comprising:
• a memory (MEM) organized to receive the data during stream production;
• a number of queues (10) assigned respectively to the data streams, organized to receive the data in the form of atomic transmission units;
• a bit rate regulator (REGL) configured to scan the queues in sequence and, if the scanned queue contains a complete transmission unit, to transmit it over the network at the nominal bit rate of the network;
• a sequencer (SEQ) configured to scan the queues circularly and activate a data request signal (SELi) when the state of filling of the scanned queue has not reached a threshold (σ) common to all the queues, which threshold is above the maximum size of the transmission units; and
• a memory transfer management circuit (DMA) configured to receive the data request signal and respond thereto by transferring data from the memory to the corresponding queue at the maximum speed of the system, until the common threshold is reached.

2. System according to Claim 1, in which the common threshold of the queues is less than twice the maximum size of the transmission units.

3. System according to Claim 2, in which the common threshold can be adjusted dynamically to take account of the transmission unit sizes actually used by the stream currently being transmitted.

4. System according to Claim 2, comprising:
• a network interface (NI) including the queues, the bit rate regulator, and the sequencer;
• a processor (CPU) programmed to produce the stream data, manage the assignment of the queues to the streams, and determine the average bit rates of the streams;
• a system bus (B) interconnecting the processor, the memory and the memory transfer management circuit (DMA); and
• a circuit for computing the common threshold from the contents of two registers that can be programmed by the processor, one containing the maximum size of the transmission unit (Sp), and the other a multiplying coefficient (K) lying between 1 and 2.

5. System according to Claim 1, in which the bit rate regulator is configured to adjust the average bit rate of a stream by confining the number of transmission units transmitted over the network within a consecutive time window.
